# EUROPÄISCHE PATENTANMELDUNG

(11) **EP 1 626 584 A2**
(43) Veröffentlichungstag der Anmeldung: **15.02.2006**
(21) Anmeldenummer: 05015527.4
(22) Anmeldetag: 18.07.2005
(51) Int. Cl.: H04N 7/18

(54) **Fahrzeug mit Bildverarbeitungssystem und Verfahren zum Betrieb eines Bildverarbeitungssystems**

(30) Priorität: 11.08.2004 DE 102004039108; 21.04.2005 DE 102005018710
(71) Anmelder: Magna Donnelly GmbH & Co. KG, 97904 Dorfprozelten (DE)
(72) Erfinder: Laufer, Martin, 97907 Hasloch (DE); Weis, Tim, Dr., 63814 Mainaschaff (DE)
(74) Vertreter: von den Steinen, Axel

(57) **Zusammenfassung**

Fahrzeug (01) mit zumindest zwei Bilddatenquellen (02), zumindest einer Mischeinheit (03), zumindest einer Umwandlungseinheit (04) und einer Bildanzeigeeinheit (05), wobei die mit den Bilddatenquellen (02) generierten Pixeldaten (09) mittels der Mischeinheit (03) insbesondere für die simultane Darstellung an der Bildanzeigeeinheit (05) zusammengeführt werden können und wobei die Pixeldaten (10) mittels der Umwandlungseinheit (04) in eine Form von Bilddaten (11) übergeführt werden können, die an der Bildanzeigeeinheit (05) darstellbar ist. Die Mischeinheit (03) weist zumindest zwei Dateneingänge (06) zum Empfang von Pixeldaten (09) der beiden Bilddatenquellen (02) und zumindest einen Datenausgang (07) für die zusammengeführten Pixeldaten (10) auf, wobei die Umwandlungseinheit (04) zumindest einen Dateneingang (08) für die zusammengeführten Pixeldaten (10) aufweist, und wobei der Datenausgang (07) der Mischeinheit (03) mit dem Dateneingang (08) der Umwandlungseinheit (04) mittelbar oder unmittelbar verbunden ist, und ein Verfahren zum Betrieb eines Bildverarbeitungssystems in einem Fahrzeug (01), indem zuerst die Pixeldaten (09) der verschiedenen Bilddatenquellen (02) mittels der Mischeinheit (03) zusammengeführt werden und danach die zusammengeführten Pixeldaten (10) mittels der Umwandlungseinheit (04) in eine Form von Bilddaten (11) übergeführt werden.

## Beschreibung

Die Erfindung betrifft ein Fahrzeug nach dem Oberbegriff des Sachhauptanspruchs und ein Verfahren zum Betrieb eines Bildverarbeitungssystems in einem Fahrzeug nach dem Oberbegriff des Verfahrenshauptanspruchs.

In gattungsgemäßen Fahrzeugen werden derartige Bildverarbeitungssysteme für verschiedene Applikationen verwendet, bei denen gleichzeitig mehrere Kameras zum Einsatz kommen. Bei diesen Applikationen kann es sich beispielsweise um Anwendungen wie Side-View, Fahrspurerkennung, Einparkkamera und Innenraumkamera zur Fahrerüberwachung handeln. Darüber hinaus kann es sinnvoll sein, die Informationen mehrerer Kameras auf der Bildanzeigeeinheit gleichzeitig zur Darstellung kommen zu lassen.

Die Bilddatenquellen dieser Bildverarbeitungssysteme sind häufig in Form von CCD-Chips und/oder CMOS-Chips ausgebildet. Die lichtempfindlichen Zellen dieser Chips erfassen grundsätzlich nur farbunabhängige Helligkeitswerte. Um Farbinformationen zu erhalten wird vor jeder einzelnen Zelle ein Farbfilter in einer der Grundfarben des jeweiligen Farbsystems, beispielsweise in rot, grün oder blau, aufgebracht. Die Filter sind dabei beispielsweise in einer "Bayer-Pattern" genannten Anordnung auf den Zellen aufgebracht. Bei dieser Anordnung wird die erste Reihe der helligkeitsempfindlichen Zellen mit Filtern in der Reihenfolge rot, grün, rot, grün u.s.w. versehen, die zweite Zeile mit Filtern der Farbe grün, blau, grün, blau u.s.w. versehen und die dritte Zeile wiederum mit Filtern in der Reihenfolge rot, grün, rot, grün versehen u.s.w.. Durch das Aufbringen dieser Filter messen die Zellen jeweils nur die Helligkeit der einzelnen Farbkomponenten und geben diese als Pixeldaten weiter.

Diese sogenannten Pixeldaten sind auf der Bildanzeigeeinheit zunächst nicht darstellbar. Zur Ermittlung der tatsächlichen Farbe müssen die benachbarten Zellen herangezogen werden. Diese Farbinterpolation wird mittels der Umwandlungseinheit vollzogen. Als Ergebnis stellt die Umwandlungseinheit Bilddaten bereit, die an der Bildanzeigeeinheit darstellbar sind.

Um eine simultane Darstellung der Informationen mehrerer Bilddatenquellen zu realisieren, ist es notwendig, die Bilddaten mehrerer Bilddatenquellen zusammenzuführen. Diese Zusammenführung erfolgt mittels der Mischeinheit. Im Stand der Technik wird stets zuerst die Umwandlung der Pixeldaten in Bilddaten vollzogen und danach werden die Bilddaten für die simultane Darstellung an der Bildanzeigeeinheit zusammengeführt.

Nachteilig an dieser Ausführungsform ist es, dass die Pixeldaten der Bilddatenquellen zunächst mit jeweils einer Umwandlungseinheit in Bilddaten übergeführt werden müssen. Dadurch sind viele dieser Umwandlungseinheiten notwendig, was in einem hohen Kostenaufwand resultiert.

Ein weiterer Nachteil dieser Ausführungsform ist es, dass auch diejenigen Bildbereiche bei der Farbinterpolation berechnet werden, die beispielsweise durch die überlagerte Einblendung von Zusatzinformationen an der Bildanzeigeeinheit oder durch Überschneidungen der Bildausschnitte verschiedener Bilddatenquellen überhaupt nicht zur Anzeige auf der Bildanzeigeeinheit kommen. Durch diese Art der Bildverarbeitung werden Ressourcen des zeitintensiven Interpolationsvorgangs verschwendet und/oder der Interpolationsvorgang wird verlangsamt.

Aufgabe der vorliegenden Erfindung ist es deshalb, ein neues Fahrzeug mit Bildverarbeitungssystem und ein neues Verfahren zum Betrieb eines Bildverarbeitungssystems vorzuschlagen. Diese Aufgabe wird durch die vorliegende Erfindung nach der Lehre des Sachhauptanspruchs und des Verfahrenshauptanspruchs gelöst.

Vorteilhafte Ausführungsformen der Erfindung sind Gegenstand der Unteransprüche.

Erfindungsgemäß wird dieses Problem dadurch gelöst, dass die Mischeinheit zumindest zwei Dateneingänge zum Empfang von Pixeldaten der beiden Bilddatenquellen und zumindest einen Datenausgang für die zusammengeführten Pixeldaten aufweist, wobei die Umwandlungseinheit zumindest einen Dateneingang für die zusammengeführten Pixeldaten aufweist, und wobei der Datenausgang der Mischeinheit mit dem Dateneingang der Umwandlungseinheit mittelbar oder unmittelbar verbunden ist.

Die von den verschiedenen Bilddatenquellen generierten Pixeldaten werden jeweils an einen Dateneingang der Mischeinheit weitergeleitet. Mittels der Mischeinheit werden die Pixeldaten derart zusammengeführt, dass am Datenausgang der Mischeinheit genau die Pixeldaten als zusammengeführte Pixeldaten austreten, die für die Darstellung des gewünschten Bildes und/oder des gewünschten Bildausschnittes und/oder der gewünschten Kombination von Bildinformationen verschiedener Bilddatenquellen erforderlich sind. Die zusammengeführten Pixeldaten werden an den Dateneingang der Umwandlungseinheit weitergeleitet. Mittels der Umwandlungseinheit wird die Umwandlung der zusammengeführten Pixeldaten in Bilddaten, die an der Bildanzeigeeinheit darstellbar sind, vollzogen.

Dadurch kommt das erfindungsgemäße Bildverarbeitungssystem mit nur einer Umwandlungseinheit aus. Ein weiterer Vorteil des erfindungsgemäßen Bildverarbeitungssystems ist es, dass die Menge der als zusammengeführte Pixeldaten am Datenausgang der Mischeinheit austretenden Pixeldaten mittels der Mischeinheit genau definierbar ist. Diese Definition richtet sich nach der jeweiligen Applikation, die mit dem Bildverarbeitungssystem realisiert werden soll. Somit werden danach in der Datenverarbeitungskette nur noch Verarbeitungsschritte und/oder Berechnungen durchgeführt, die im weiteren Verlauf der Datenverarbeitung noch benötigt werden. Diese Reduktion der Pixeldaten mittels der Mischeinheit auf eine relevante Teilmenge ist insbesondere für die Umwandlungseinheit hinsichtlich des zeitintensiven Interpolationsvorgangs von besonderem Vorteil.

Die Ausführungsform der Bilddatenquellen ist dabei grundsätzlich ohne Belang. Es ist jedoch von Vorteil, wenn die Bilddatenquellen zumindest eine CCD-Einheit und/oder eine CMOS-Einheit aufweisen. Diese Ausführungsform ist besonders kostengünstig.

Die Ausführungsform der Mischeinheit ist grundsätzlich beliebig. Vorteilhaft ist es jedoch, die Mischeinheit mit zumindest jeweils einem Dateneingang zum Empfang von Pixeldaten pro Bilddatenquelle auszustatten. Des Weiteren sollte die Mischeinheit über einen Datenausgang für die zusammengeführten Pixeldaten verfügen.

In einer weiteren Ausführungsform verfügt die Mischeinheit zumindest über einen Dateneingang, wobei die mit den Bilddatenquellen generierten Pixeldaten mittelbar oder unmittelbar an diesen einen Dateneingang der Mischeinheit weitergeleitet werden können. Bei einer digitalen Adressierung der Pixeldaten bietet diese Ausführungsform besondere Vorteile hinsichtlich einer kompakten Bauweise der Mischeinheit.

Zur Realisierung der Mischeinheit sind integrierte Schaltkreise besonders geeignet. Insbesondere kann dabei an einen vorprogrammierten und/oder frei programmierbaren integrierten Schaltkreis, beispielsweise einen DSP und/oder einen FPGA und/oder einen ASIC, gedacht werden. Frei programmierbare Bausteine sind zwar in der Beschaffung teurer, aber es können beispielsweise direkt bei der Zusammenführung der Pixeldaten zusätzliche Verarbeitungen und/oder Auswertungen durchgeführt werden.

Die Umwandlungseinheit weist erfindungsgemäß zumindest einen Dateneingang für die bereits zusammengeführten Pixeldaten auf. Des Weiteren ist es vorteilhaft, die Umwandlungseinheit mit einem Datenausgang zu versehen, der die umgewandelten, an der Bildanzeigeeinheit darstellbaren Bilddaten zur Verfügung stellt.

Die Ausbildung der Umwandlungseinheit ist ebenfalls grundsätzlich ohne Belang. Besonders vorteilhaft ist es jedoch, die Umwandlungseinheit in Form eines integrierten Schaltkreises auszubilden. Es eignen sich dazu insbesondere vorprogrammierte und/oder frei programmierbare integrierte Schaltkreise, wie beispielsweise ein DSP und/oder ein FPGA und/oder ein ASIC.

Die Verschaltung der einzelnen Elemente des Bildverarbeitungssystems erfolgen erfindungsgemäß derart, dass der Datenausgang der Mischeinheit mit dem Dateneingang der Umwandlungseinheit mittelbar oder unmittelbar verbunden ist. Dabei gelangen die von der Mischeinheit bereits zusammengeführten Pixeldaten mittelbar oder unmittelbar zur Umwandlungseinheit. In der Umwandlungseinheit werden die Pixeldaten in eine Form von Bilddaten übergeführt, die an der Bildanzeigeeinheit darstellbar ist, und über den Ausgang der Umwandlungseinheit einem weiteren Rechenwerk und/oder einer Bildanzeigeeinheit zugeführt.

Diese Ausführungsform bietet die besonderen Vorteile, dass das gesamte Bildverarbeitungssystem mit nur einer Umwandlungseinheit auskommen kann. Dies spart zum einen hohe Kosten durch Beschaffung mehrerer Umwandlungseinheiten und zum anderen die Verarbeitung von Daten in Teilen des Bildverarbeitungssystems, wobei diese Daten aus oben genannten Gründen nicht zur Anzeige kommen.

In einer weiteren Ausführungsform verfügt das Bildverarbeitungssystem über zumindest ein drittes Rechenwerk der Datenverarbeitungskette, wobei mittels dem dritten Rechenwerk zusätzliche Verarbeitungen und/oder Auswertungen mit den Pixeldaten und/oder Bilddaten durchführbar sind. Dieses dritte Rechenwerk kann beispielsweise in Form eines eigenen integrierten Schaltkreises ausgebildet sein und an einer beliebigen Stelle in der Datenverarbeitungskette angeordnet sein.

Ebenfalls denkbar wäre eine Integration des dritten Rechenwerks in die Mischeinheit und/oder in die Umwandlungseinheit. Diese Integration ist bei einer Ausbildung der Mischeinheit und/oder der Umwandlungseinheit als programmierbarer integrierter Schaltkreis besonders einfach realisierbar.

Eine besonders leistungsfähige und schnelle Datenverarbeitung ist möglich, wenn mehrere, insbesondere baugleich ausgebildete, dritte Rechenwerke in der Datenverarbeitungskette vorgesehen sind. In diesen verschiedenen Rechenwerken können einzelne Funktonen unabhängig voneinander parallel abgearbeitet werden. So ist es beispielsweise denkbar, dass allen dritten Rechenwerken die Bilddaten synchron zur Verfügung gestellt werden, wobei dann in einem Rechenwerk beispielsweise die Bilddaten zur Bilddarstellung errechnet werden, wohingegen ein anderes Rechenwerk zeitgleich eine Objekterkennungsfunktion, insbesondere eine Verkehrszeichenerkennungsfunktion abarbeitet.

Bei manchen Applikationen ist es dabei von Vorteil, wenn die verschiedenen dritten Rechenwerke Daten über Datenleitungen miteinander austauschen können, um die einzelnen Bildverarbeitungsergebnisse miteinander auszutauschen.

All diese Ausführungsformen erlauben eine besonders variable Gestaltung des Bildverarbeitungssystems. Durch den Einsatz verschiedener Einheiten ist es möglich, die Leistungsfähigkeit des Bildverarbeitungssystems zu optimieren. Da die Leistungsfähigkeit der Einheiten mit deren Beschaffungskosten korreliert, kann auf diese Weise auch der Kostenaufwand für das Bildverarbeitungssystem optimiert werden.

Die Ausführungsform der Bildanzeigeeinheit ist grundsätzlich ohne Belang. Wegen der kleinen Abmessungen ist die Ausführung der Bildanzeigeeinheit in Form eines Flachbildschirms und/oder eines Displays besonders geeignet. Dabei ist der Flachbildschirm und/oder das Display im oder in der Nähe des Blickfeldes des Fahrer angeordnet. Die Bildanzeigeeinheit kann auch in Form eines Projektionsgerätes ausgebildet sein. Diese Ausführungsform bietet den besonderen Vorteil, dass eine Anzeige durch Projektion auf die Innenseite der Frontscheibe direkt im Blickfeld des Fahrers möglich wird.

Das erfindungsgemäße Verfahren zum Betrieb eines Bildverarbeitungssystems in einem Fahrzeug, mit zumindest zwei Bilddatenquellen, insbesondere CCD-Einheiten und/oder CMOS-Einheiten, zumindest einer Mischeinheit, zumindest einer Umwandlungseinheit und einer Bildanzeigeeinheit, weist zumindest zwei Verarbeitungsschritte auf.

Es werden zuerst die Pixeldaten der verschiedenen Bilddatenquellen mittels der Mischeinheit zusammengeführt und danach die zusammengeführten Pixeldaten mittels der Umwandlungseinheit in eine Form von Bilddaten übergeführt.

Dabei wird im erstgenannten Verfahrensschritt die Zusammenführung der mittelbar oder unmittelbar an die Mischeinheit geleiteten Pixeldaten der verschiedenen Bilddatenquellen vollzogen.

Die Art der Zusammenführung ist grundsätzlich beliebig. Besonders vorteilhaft ist es jedoch, die Zusammenführung derart zu gestalten, dass aus der Mischeinheit nur noch diejenigen Pixeldaten als zusammengeführte Pixeldaten austreten, die auf der Bildanzeigeeinheit zur Darstellung kommen sollen. Dadurch werden beispielsweise Überschneidungen bei Panoramaaufnahmen oder bei Einblendungen im Bild vermieden und wird somit die Gesamtmenge der von den verschiedenen Bilddatenquellen generierten Pixeldaten mittels der Mischeinheit auf eine Teilmenge reduziert, die an der Bildanzeigeeinheit dargestellt werden soll. Dadurch wird der Zeitaufwand für Berechnungen und Verarbeitungen in den folgenden Verfahrensschritten optimiert.

Im zweiten Verfahrensschritt wird die Überführung der zusammengeführten Pixeldaten in eine Form von Bilddaten, die an der Bildanzeigeeinheit darstellbar sind, mittels der Umwandlungseinheit vollzogen.

Die Art und Weise der Überführung ist grundsätzlich ohne Belang. Eine bekannte Überführung der Pixeldaten in eine Form von Bilddaten basiert auf einer Mittelwertbildung über Nachbarpixeldaten, insbesondere auf einer Interpolation.

Die Zusammenführung als erster Verfahrensschritt und die Überführung als zweiter Verfahrensschritt stellen grundsätzlich nur die Minimalkonfiguration des Verfahrens dar. Es sind jedoch noch zusätzliche Verarbeitungsschritte und/oder Auswertungsschritte in diesem Verfahren denkbar.

Und zwar könnten die Pixeldaten der verschiedenen Bilddatenquellen zusätzlichen Verarbeitungsschritten und/oder Auswertungsschritten unterzogen werden, bevor sie in die Mischeinheit gelangen, und/oder es könnten die mit der Mischeinheit bereits zusammengeführten Pixeldaten zusätzlichen Verarbeitungsschritten und/oder Auswertungsschritten unterzogen werden, bevor sie in die Umwandlungseinheit gelangen, und/oder es könnten die mittels der Umwandlungseinheit bereits übergeführten Bilddaten zusätzlichen Verarbeitungsschritten und/oder Auswertungsschritten unterzogen werden.

Diese zusätzlichen Verarbeitungsschritte und/oder Auswertungsschritte könnten beispielsweise mittels eines dritten Rechenwerks durchführbar sein. Das dritte Rechenwerk könnte von seiner Leistung optimal an die Erfordernisse der Verarbeitungsschritte und/oder der Auswertungsschritte angepasst werden. Dies unterstützt die Skalierbarkeit des gesamten Bildverarbeitungssystems.

In einer weiteren Ausführungsform ist die Durchführung der zusätzlichen Verarbeitungsschritte und/oder Auswertungsschritte mittels der Mischeinheit und/oder mittels der Umwandlungseinheit denkbar. Diese Ausführungsform bietet sich insbesondere bei der Zusammenführung der Pixeldaten zu einer Panoramaansicht an. Dabei wird durch die zusätzlichen Verarbeitungsschritte und/oder Auswertungsschritte beispielsweise direkt bei der Zusammenführung in der Mischeinheit die Zusammenführung der Pixeldaten verschiedener Bilddatenquellen zu einer Panoramaansicht und gegebenenfalls die Reduzierung der verschiedenen Bilddaten um die Überschneidungsbereiche vollzogen.

Die Berechnungen, die durch die Verarbeitungsschritte und/oder Auswertungsschritte vorgenommen werden, unterliegen keiner Beschränkung. Sie sind entsprechend der Anwendung, die durch das Bildverarbeitungssystem realisiert werden soll, zu konzipieren.

So ist es beispielsweise für die Realisierung einer Side-View-Anwendung mit Panoramadarstellung erforderlich, dass die Verarbeitungsschritte und/oder Auswertungsschritte zumindest auf einer Form zur Erkennung von Bildüberschneidungen basieren. Um beispielsweise Anwendungen wie Fahrspurerkennung, Einparkkamera und/oder Überwachung des Fahrers zu gestalten, ist es erforderlich, dass die Verarbeitungsschritte und/oder Auswertungsschritte zumindest auf einer Form von Bildbereichsanalyse und/oder Bildbereichserkennung basieren.

In dem Fall, in dem die zusätzlichen Verarbeitungsschritte und/oder Auswertungsschritte Berechnungen durchführen, die zu einem Ergebnis führen, beispielsweise die Berechnung von Geschwindigkeiten oder Abständen, wird erfindungsgemäß vorgeschlagen, dass die Ergebnisse der zusätzlichen Verarbeitungsschritte und/oder Auswertungsschritte an der Bildanzeigeeinheit darstellbar sind.

Nachfolgend wird das erfindungsgemäße Verfahren sowie ein zur Durchführung des erfindungsgemäßen Verfahrens geeignetes Bildverarbeitungssystem in verschiedenen Ausführungsformen anhand der Zeichnungen beispielhaft erläutert.

Es zeigen:
- **Fig. 1**: eine erste Ausführungsform eines Bildverarbeitungssystems in einem Fahrzeug;
- **Fig. 2**: eine zweite Ausführungsform eines Bildverarbeitungssystems als Funktionsschema;
- **Fig. 3**: eine dritte Ausführungsform eines Bildverarbeitungssystems als Funktionsschema;
- **Fig. 4**: eine vierte Ausführungsform eines Bildverarbeitungssystems als Funktionsschema;
- **Fig. 5**: eine erste Ausführungsform der Zusammenführung mittels der Mischeinheit als Funktionsschema;
- **Fig. 6**: eine zweite Ausführungsform der Zusammenführung mittels der Mischeinheit als Funktionsschema.

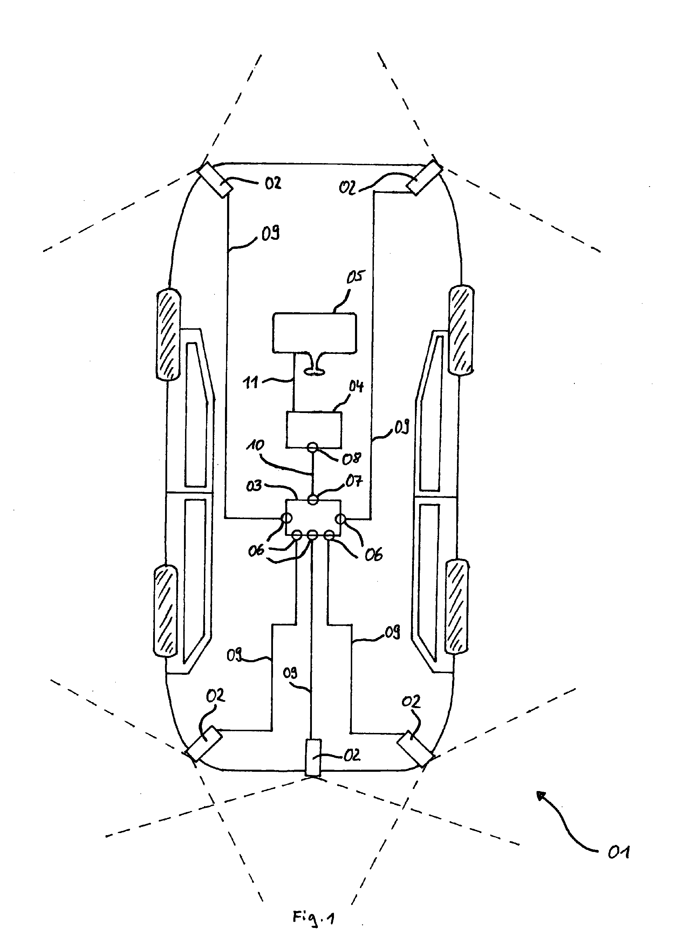

**Fig. 1** zeigt ein Fahrzeug 01 mit fünf Bilddatenquellen 02, von denen zwei Bilddatenquellen im Frontbereich des Fahrzeugs 01 angeordnet sind und drei Bilddatenquellen im Heckbereich des Fahrzeugs 01 angeordnet sind. Die Bilddatenquellen 02 sind in dieser Ausführungsform des Bildverarbeitungssystems als Kameras ausgebildet und überwachen jeweils unterschiedliche Bereiche. Des Weiteren weist das Fahrzeug 01 eine Mischeinheit 03, eine Umwandlungseinheit 04 sowie eine Bildanzeigeeinheit 05 auf. Die Mischeinheit verfügt über fünf Dateneingänge 06 und über einen Datenausgang 07. Die Umwandlungseinheit verfügt zumindest über einen Dateneingang 08.

Die von den Bilddatenquellen 02 generierten Pixeldaten 09 werden jeweils an einen Dateneingang 06 der Mischeinheit 03 weitergeleitet. In der Mischeinheit 03 werden die Pixeldaten 09 der verschiedenen Bilddatenquellen 02 zusammengeführt und gegebenenfalls zusätzliche Verarbeitungsschritte und/oder Auswertungsschritte durchgeführt. Die zusammengeführten Pixeldaten 10 werden am Datenausgang 07 der Mischeinheit 03 zur Verfügung gestellt und zum Dateneingang 08 der Umwandlungseinheit 04 weitergeleitet. In der Umwandlungseinheit 04 werden die zusammengeführten Pixeldaten 10 in eine Form von Bilddaten 11 übergeführt, die an der Bildanzeigeeinheit 05 darstellbar ist.

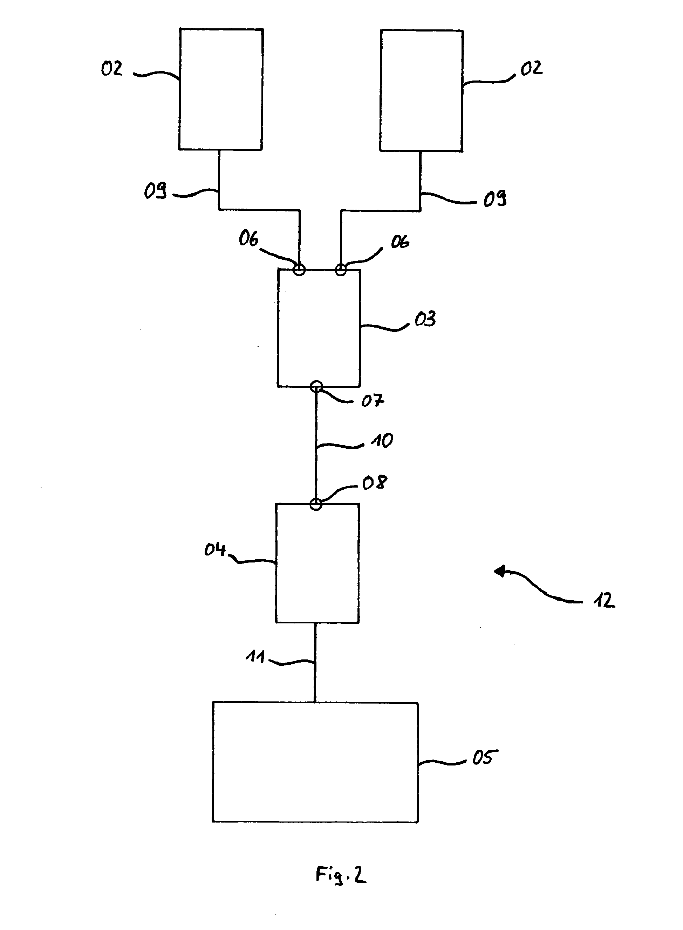

**Fig. 2** zeigt eine zweite Ausführungsform eines Bildverarbeitungssystems als Funktionsschema. Das Bildverarbeitungssystem 12 weist zwei Bilddatenquellen 02, eine Mischeinheit 03 mit zwei Dateneingängen 06 und einem Datenausgang 07 sowie eine Umwandlungseinheit 04 mit zumindest einem Dateneingang 08 und einer Bildanzeigeeinheit 05 auf.

Die Pixeldaten 09 der verschiedenen Bilddatenquellen 02 werden jeweils an einen Dateneingang 06 der Mischeinheit 03 weitergeleitet, in der Mischeinheit 03 in einem ersten Verfahrensschritt zusammengeführt und am Datenausgang 07 in der Mischeinheit 03 als zusammengeführte Pixeldaten 10 zur Verfügung gestellt. Die zusammengeführten Pixeldaten 10 werden vom Datenausgang 07 der Mischeinheit 03 an den Dateneingang 08 der Umwandlungseinheit 04 weitergeleitet. In der Umwandlungseinheit 04 werden die zusammengeführten Pixeldaten 10 in eine Form von Bilddaten 11, die an der Bildanzeigeeinheit 05 dargestellt werden können, übergeführt und zur Bildanzeigeeinheit 05 weitergeleitet.

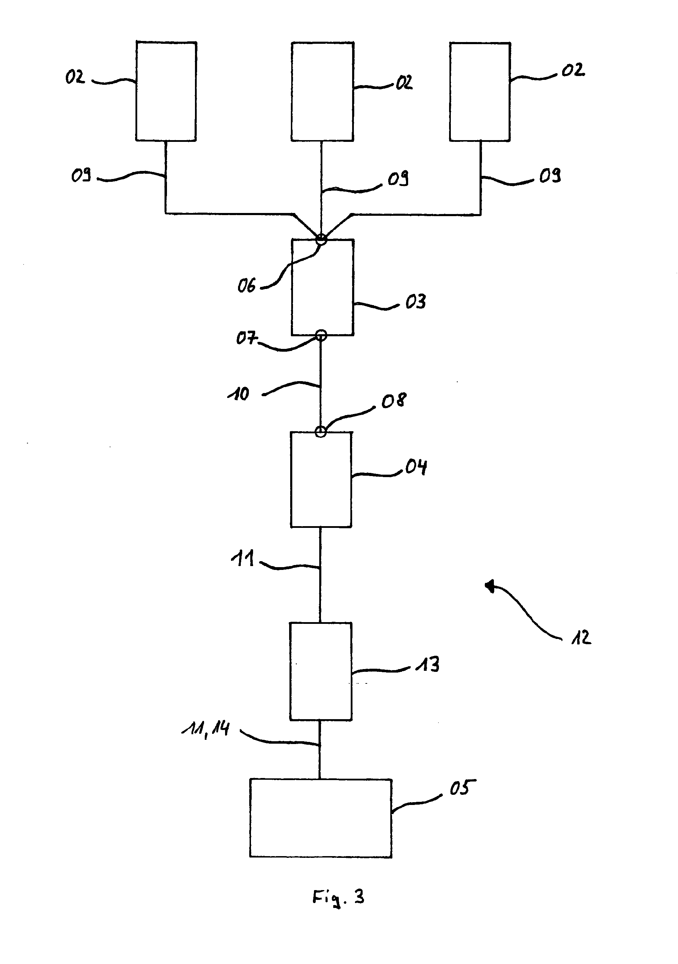

**Fig. 3** zeigt eine dritte Ausführungsform eines Bildverarbeitungssystems als Funktionsschema. Das Bildverarbeitungssystem 12 weist drei Bilddatenquellen 02, eine Mischeinheit 03 mit nur einem Dateneingang 06 und einem Datenausgang 07 sowie eine Umwandlungseinheit 04 mit zumindest einem Dateneingang 08, eine drittes Rechenwerk 13 und eine Bildanzeigeeinheit 05 auf.

Die Pixeldaten 09 der verschiedenen Bilddatenquellen 02 werden an den gemeinsamen Eingang 06 der Mischeinheit 03 weitergeleitet. Die zusammengeführten Pixeldaten 10 werden am Datenausgang 07 der Mischeinheit 03 zur Verfügung gestellt und an den Dateneingang 08 der Umwandlungseinheit 04 weitergeleitet. Dort werden die zusammengeführten Pixeldaten 10 in eine Form von Bilddaten 11, die an der Bildanzeigeeinheit 05 darstellbar ist, umgewandelt und zunächst an das dritte Rechenwerk 13 weitergeleitet. Das dritte Rechenwerk 13 kann Berechnungen und/oder zusätzliche Verarbeitungsschritte und/oder Auswertungsschritte durchführen. Die Bilddaten 11 und gegebenenfalls das Ergebnis der Berechnungen und/oder zusätzlichen Verarbeitungsschritte und/oder Auswertungsschritte werden an die Bildanzeigeeinheit 05 weitergeleitet.

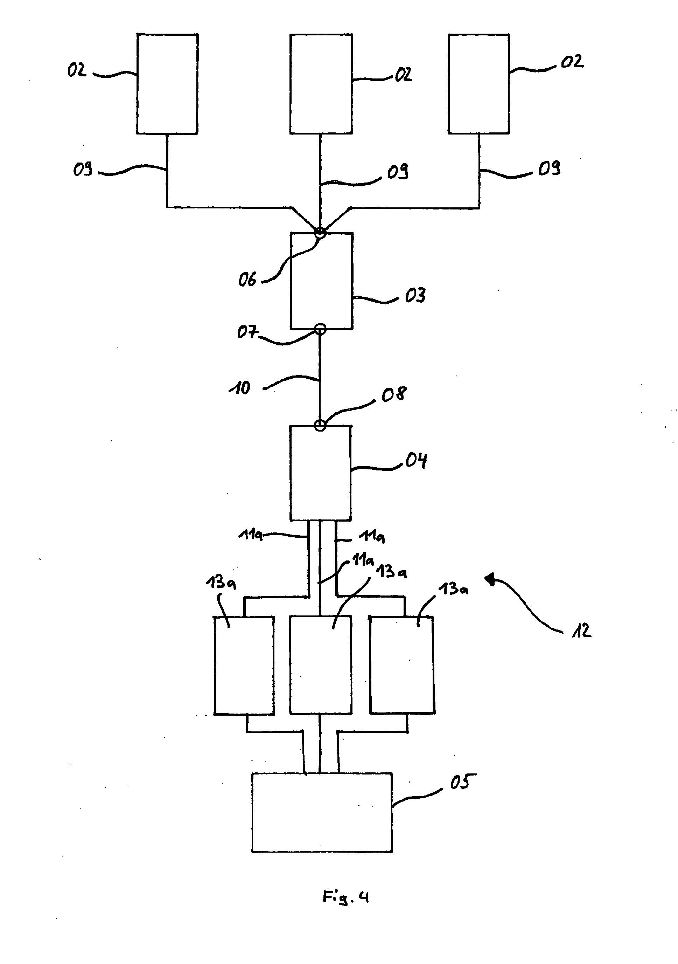

**Fig. 4** zeigt eine vierte Ausführungsform eines Bildverarbeitungssystems, deren Aufbau im Wesentlichen der dritten Ausführungsform entspricht. Die vierte Ausführungsform unterscheidet sich dadurch, dass mehrere parallel zueinander betreibbare dritte Rechenwerke 13a vorgesehen sind, in denen unabhängig voneinander verschiedene Bildverarbeitungsaufgaben abgearbeitet werden können.

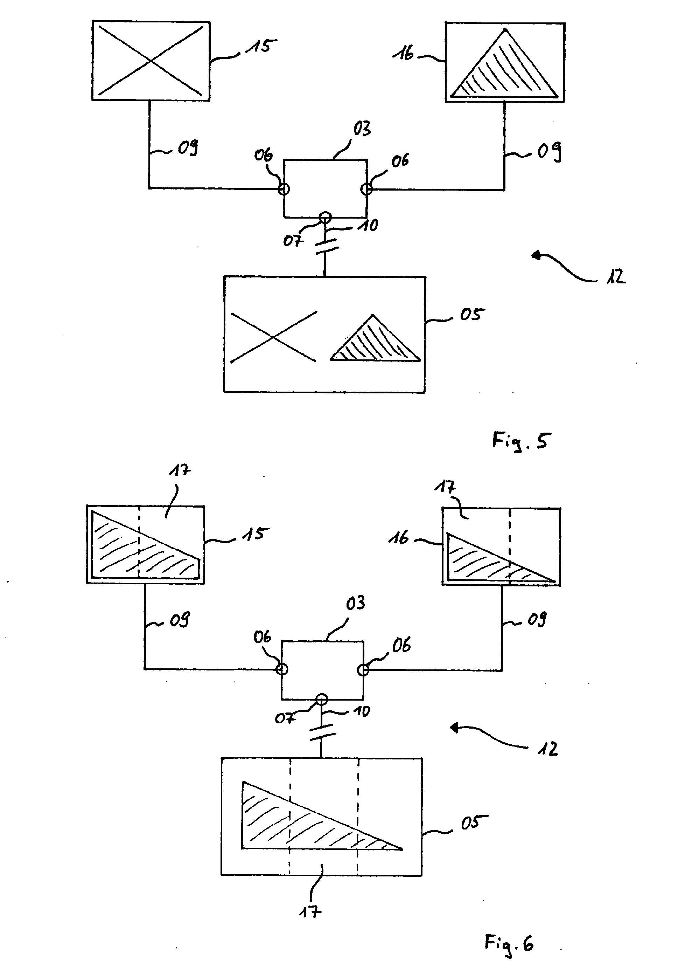

**Fig. 5** zeigt eine erste Ausführungsform der Zusammenführung der Pixeldaten der verschiedenen Bilddatenquellen als Funktionsschema. Das Bildverarbeitungssystem 12 weist eine erste Bilddatenquelle 15 und eine zweite Bilddatenquelle 16 auf, wobei die zwei Bilddatenquellen unterschiedliche Informationen aufnehmen. Des Weiteren weist das Bildverarbeitungssystem 12 eine Mischeinheit 03 mit zwei Dateneingängen 06 und einen Datenausgang 07 sowie einer Bildanzeigeeinheit 05 auf.

Die Pixeldaten 09 der verschiedenen Bilddatenquellen 15, 16 werden an die Dateneingänge 06 der Mischeinheit 03 weitergeleitet. In der Mischeinheit 03 wird eine Zusammenführung der Pixeldaten 09 der verschiedenen Bilddatenquellen 15, 16 derart durchgeführt, dass am Ausgang 07 der Mischeinheit 03 ein Gesamtbild in Form von zusammengeführten Pixeldaten 10 austritt, wobei das Gesamtbild die gesamte Bildinformation der ersten Bilddatenquelle 15 und der zweiten Bilddatenquelle 16 als Vereinigungsmenge enthält.

**Fig. 6** zeigt eine zweite Ausführungsform der Zusammenführung der Pixeldaten der verschiedenen Bilddatenquellen als Funktionsschema. Das Bildverarbeitungssystem 12 weist eine erste Bilddatenquelle 15 und eine zweite Bilddatenquelle 16 auf, wobei die zwei Bilddatenquellen 15, 16 in einem Überschneidungsbereich 17 die gleiche Bildinformation aufnehmen. Des Weiteren weist das Bildverarbeitungssystem 12 eine Mischeinheit 03 mit zwei Dateneingängen 06 und einem Datenausgang 07 sowie eine Bildanzeigeeinheit 05 auf.

Die Pixeldaten 09 der ersten Bilddatenquelle 15 und der zweiten Bilddatenquelle 16 werden an die Dateneingänge 06 der Mischeinheit 03 weitergeleitet. In der Mischeinheit 03 wird die Zusammenführung der Pixeldaten 09 der verschiedenen Bilddatenquellen 15, 16 derart durchgeführt, dass am Datenausgang 07 in der Mischeinheit 03 ein Gesamtbild in Form von zusammengeführten Pixeldaten 10 austritt, wobei das Gesamtbild passend aus den Bildern der ersten Bilddatenquelle 15 und der zweiten Bilddatenquelle 16 zusammengesetzt wurde.

## Patentansprüche

1. Fahrzeug (01) mit zumindest zwei Bilddatenquellen (02, 15, 16), zumindest einer Mischeinheit (03), zumindest einer Umwandlungseinheit (04) und einer Bildanzeigeeinheit (05), wobei die mit den Bilddatenquellen (02, 15, 16) generierten Pixeldaten (09) mittels der Mischeinheit (03) insbesondere für die simultane Darstellung an der Bildanzeigeeinheit (05) zusammengeführt werden können, und wobei die Pixeldaten (10) mittels der Umwandlungseinheit in eine Form von Bilddaten (11) übergeführt werden können, die an der Bildanzeigeeinheit (05) darstellbar ist,
**dadurch gekennzeichnet,**
**dass** die Mischeinheit (03) zumindest zwei Dateneingänge (06) zum Empfang von Pixeldaten (09) der beiden Bilddatenquellen (02, 15, 16) und zumindest einen Datenausgang (07) für die zusammengeführten Pixeldaten (10) aufweist, wobei die Umwandlungseinheit (04) zumindest einen Dateneingang (08) für die zusammengeführten Pixeldaten (10) aufweist, und wobei der Datenausgang (07) der Mischeinheit (03) mit dem Dateneingang (08) der Umwandlungseinheit (04) mittelbar oder unmittelbar verbunden ist.

2. Fahrzeug nach Anspruch 1,
**dadurch gekennzeichnet,**
**dass** die Bilddatenquellen (02, 15, 16) zumindest eine CCD-Einheit und/oder CMOS-Einheit aufweisen.

3. Fahrzeug nach Anspruch 1 oder 2,
**dadurch gekennzeichnet,**
**dass** die Mischeinheit (03) zumindest einen Dateneingang (06) aufweist, wobei die mit den Bilddatenquellen (02, 15, 16) generierten Pixeldaten (09) mittelbar oder unmittelbar an den Dateneingang (06) der Mischeinheit (03) weitergeleitet werden können.

4. Fahrzeug nach einem der Ansprüche 1 bis 3,
**dadurch gekennzeichnet,**
**dass** die Mischeinheit (03) in Form eines integrierten Schaltkreises, insbesondere eines DSP und/oder eines FPGA und/oder eines ASIC, ausgebildet ist.

5. Fahrzeug nach einem der Ansprüche 1 bis 4,
**dadurch gekennzeichnet,**
**dass** die Umwandlungseinheit (04) in Form eines integrierten Schaltkreises, insbesondere eines DSP und/oder eines FPGA und/oder eines ASIC, ausgebildet ist.

6. Fahrzeug nach einem der Ansprüche 1 bis 5,
**dadurch gekennzeichnet,**
**dass** zumindest ein drittes Rechenwerk (13) in der Datenverarbeitungskette vorgesehen ist, wobei mittels des dritten Rechenwerks (13) zusätzliche Verarbeitungen und/oder Auswertungen mit den Pixeldaten (09, 10) und/oder Bilddaten (11) durchführbar sind.

7. Fahrzeug nach einem der Ansprüche 1 bis 6,
**dadurch gekennzeichnet,**
**dass** das dritte Rechenwerk (13) in die Mischeinheit (03) und/oder die Umwandlungseinheit (04) integriert ist.

8. Fahrzeug nach einem der Ansprüche 1 bis 7,
**dadurch gekennzeichnet,**
**dass** mehrere, insbesondere baugleich ausgebildete, dritte Rechenwerke (13a) in der Datenverarbeitungskette vorgesehen sind, in denen einzelne Funktonen unabhängig voneinander parallel abgearbeitet werden können.

9. Fahrzeug nach einem der Ansprüche 1 bis 8,
**dadurch gekennzeichnet,**
**dass** die verschiedenen dritten Rechenwerke (13a) Daten über Datenleitungen miteinander austauschen können.

10. Fahrzeug nach einem der Ansprüche 1 bis 9,
**dadurch gekennzeichnet,**
**dass** die Bildanzeigeeinheit (05) in Form eines Flachbildschirmes und/oder eines Displays ausgebildet ist.

11. Fahrzeug nach einem der Ansprüche 1 bis 9,
**dadurch gekennzeichnet,**
**dass** die Bildanzeigeeinheit (05) in Form eines Projektionsgerätes ausgebildet ist.

12. Verfahren zum Betrieb eines Bildverarbeitungssystems in einem Fahrzeug (01), mit zumindest zwei Bilddatenquellen (02, 15, 16), insbesondere CCD-Einheiten und/oder CMOS-Einheiten, zumindest einer Mischeinheit (03), zumindest einer Umwandlungseinheit (04) und einer Bildanzeigeeinheit (05), wobei die mit den Bilddatenquellen (02, 15, 16) generierten Pixeldaten (09) mittels der Mischeinheit (03) insbesondere für die simultane Darstellung an der Bildanzeigeeinheit (05) zusammengeführt werden können, und wobei die Pixeldaten (10) mittels der Umwandlungseinheit (04) in eine Form von Bilddaten (11) übergeführt werden können, die an der Bildanzeigeeinheit (05) darstellbar ist,
**dadurch gekennzeichnet, dass**
- zuerst die Pixeldaten (09) der verschiedenen Bilddatenquellen (02, 15, 16) mittels der Mischeinheit (03) zusammengeführt werden
- und danach die zusammengeführten Pixeldaten (10) mittels der Umwandlungseinheit (04) in eine Form von Bilddaten (11) übergeführt werden.

13. Verfahren nach Anspruch 12,
**dadurch gekennzeichnet,**
**dass** die Gesamtmenge der von den verschiedenen Bilddatenquellen (02, 15, 16) generierten Pixeldaten (09) mittels der Mischeinheit (03) auf eine Teilmenge reduzierbar ist, die an der Bildanzeigeeinheit (05) dargestellt werden soll.

14. Verfahren nach Anspruch 12 oder 13,
**dadurch gekennzeichnet,**
**dass** die Überführung der Pixeldaten (09, 10) in eine Form von Bilddaten (11) auf einer Mittelwertbildung über Nachbarpixeldaten, insbesondere einer Interpolation, basiert.

15. Verfahren nach einem der Ansprüche 12 bis 14,
**dadurch gekennzeichnet,**
**dass** die Pixeldaten (09) der verschiedenen Bilddatenquellen (02, 15, 16) zusätzlichen Verarbeitungsschritten und/oder Auswertungsschritten unterzogen werden, bevor sie in die Mischeinheit (03) gelangen.

16. Verfahren nach einem der Ansprüche 12 bis 15,
**dadurch gekennzeichnet,**
**dass** die mit der Mischeinheit (03) bereits zusammengeführten Pixeldaten (10) zusätzlichen Verarbeitungsschritten und/oder Auswertungsschritten unterzogen werden, bevor sie in die Umwandlungseinheit (04) gelangen.

17. Verfahren nach einem der Ansprüche 12 bis 16,
**dadurch gekennzeichnet ,**
**dass** die mittels der Umwandlungseinheit (04) bereits übergeführten Bilddaten (11) zusätzlichen Verarbeitungsschritten und/oder Auswertungsschritten unterzogen werden.

18. Verfahren nach einem der Ansprüche 12 bis 17,
**dadurch gekennzeichnet,**
**dass** die zusätzlichen Verarbeitungsschritte und/oder Auswertungsschritte mittels eines dritten Rechenwerks (13) durchführbar sind.

19. Verfahren nach Anspruch 18,
**dadurch gekennzeichnet ,**
**dass** die zusätzlichen Verarbeitungsschritte und/oder Auswertungsschritte mittels mehrerer dritter Rechenwerke (13a) parallel zueinander abgearbeitet werden.

20. Verfahren nach einem der Ansprüche 12 bis 19,
**dadurch gekennzeichnet,**
**dass** die zusätzlichen Verarbeitungsschritte und/oder Auswertungsschritte mittels der Mischeinheit (03) und/oder mittels der Umwandlungseinheit (04) durchführbar sind.

21. Verfahren nach einem der Ansprüche 12 bis 20,
**dadurch gekennzeichnet,**
**dass** die Verarbeitungsschritte und/oder Auswertungsschritte auf einer Form zur Erkennung von Bildüberschneidungen basieren.

22. Verfahren nach einem der Ansprüche 12 bis 21,
**dadurch gekennzeichnet,**
**dass** die Verarbeitungsschritte und/oder Auswertungsschritte auf einer Form von Bildbereichsanalyse und/oder Bildbereichserkennung basieren.

23. Verfahren nach einem der Ansprüche 12 bis 22,
**dadurch gekennzeichnet,**
**dass** die Ergebnisse der zusätzlichen Verarbeitungsschritte und/oder Auswertungsschritte an der Bildanzeigeeinheit (05) darstellbar sind.
